# EUROPÄISCHE PATENTANMELDUNG

(11) **EP 1 239 599 A1**
(43) Veröffentlichungstag der Anmeldung: **11.09.2002**
(21) Anmeldenummer: 01105591.0
(22) Anmeldetag: 06.03.2001
(51) Int. Cl.: H04B 1/69

(54) **Ultra-Breitband-Kommunikationsverfahren und -system, sowie Sende- und Empfangseinheit zur Verwendung in einem derartigen System**

(71) Anmelder: SIEMENS AKTIENGESELLSCHAFT, 80333 München (DE)
(72) Erfinder: Die Erfindernennung liegt noch nicht vor

(57) **Zusammenfassung**

Die Erfindung betrifft ein Ultra-Breitband-Kommunikationsverfahren und ein Ultra-Breitband-Kommunikationssystem (1), welches eine Sendeeinheit (2) aufweist, von welcher aus Informationen in Form von impulsinversions-modulierten Ultra-Breitband-Impulsen (IB1, IB0) an eine Empfangseinheit (4) übertragen werden. Dabei ist ein einer zu übertragenden "1" zugeordneter Impuls (IB1) im wesentlichen gegenphasig zu einem einer zu übertragenden "0" zugeordneten Impuls (IB0).

## Beschreibung

Die Erfindung betrifft ein Ultra-Breitband-Kommunikationssystem, welches eine Sendeeinheit aufweist, von welcher aus Informationen in Form von Ultra-Breitband-Impulsen an eine Empfangseinheit übertragen werden. Des weiteren betrifft die Erfindung eine Sende- und eine Empfangseinheit zur Verwendung in einem derartigen System, sowie ein Ultra-Breitband-Übertragungsverfahren.

Bei Ultra-Breitband- bzw. UWB-Systemen ("UWB" = Ultra Wideband) werden Informationen in Form einer Folge von jeweils nur extrem kurz andauernden Impulsen übertragen. Die Impulsdauer liegt dabei im Piko- bzw. Nanosekundenbereich, im allgemeinen zwischen 100 Pikosekunden und 1 Nanosekunde.

Eine derart kurze Impulsdauer führt zu einer extrem großen Bandbreite des Übertragungssignals, und damit zu sehr geringen spektralen Leistungsdichten (Übertragungsleistung in Watt pro Hertz Bandbreite). UWB-Übertragungssignale können somit von unberechtigten Dritten nur schwer vom Grundrauschpegel unterschieden werden, und sind deshalb relativ abhörsicher.

Des weiteren können für die Übertragung von UWB-Signalen Frequenzbereiche verwendet werden, die gleichzeitig von anderen, nicht mit UWB-Signalen arbeitenden Nachrichtenübertragungssystemen benutzt werden. Durch die wie oben erwähnt niedrigen spektralen Leistungsdichten von UWB-Signalen wird die Signalübertragung der anderen Nachrichtensysteme durch die UWB-Signale nicht oder nur wenig gestört.

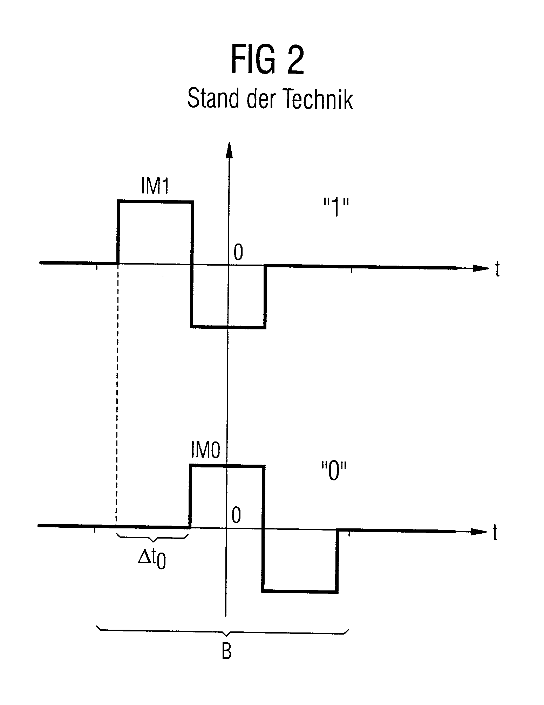

Bei herkömmlichen UWB-Systemen wird - abhängig von der jeweils zu übertragenden Information - die Lage der gesendeten UWB-Impulse geändert (Impulslagemodulation bzw. PPM ("PPM" = pulse position modulation)). Wie in Fig. 2 gezeigt ist, wird dabei beispielsweise ein einer zu übertragenden "1" zugeordneter UWB-Impuls IM1 geringfügig, z.B. einige trillionstel Sekunden früher übertragen, als ein UWB-Impuls IM0, mit dem eine "0" übertragen werden soll.

Die Erfindung hat zur Aufgabe, herkömmliche Ultra-Breitband-Kommunikationsverfahren bzw. -systeme, sowie Sende- und Empfangseinheiten zur Verwendung in derartigen Systemen weiterzubilden.

Sie erreicht dieses und weitere Ziele durch die Gegenstände der Ansprüche 1, 9 und 10.

Vorteilhafte Weiterbildungen der Erfindung sind in den Unteransprüchen angegeben.

Gemäß einem Grundgedanken der Erfindung wird zur Informationsübertragung die Polarität der übertragenen Ultra-Breitband-Impulse geändert bzw. umgekehrt (Pulse Inversion Modulation bzw. Impulsinversionsmodulation). Beispielsweise wird dann, wenn eine "1" übertragen werden soll, ein Impuls gesendet, der im wesentlichen gegenphasig ist zu einem Impuls, der bei einer zu übertragenden "0" gesendet wird. Dadurch wird die Empfängersynchronisation vereinfacht. Im Gegensatz zu herkömmlichen, auf Impulslagemodulation basierenden UWB-Systemen entfällt die Notwendigkeit, Unterschiede in der Impulsankunftszeit auf einige trillionstel Sekunden genau festzustellen. Stattdessen genügt es, empfängerseitig die Polarität des empfangenen Impulses zu ermitteln. Eine differentielle Codierung zwischen aufeinanderfolgenden Impulsen erleichtert die Decodierung.

Im folgenden wird die Erfindung anhand eines Ausführungsbeispiels und der beigefügten Zeichnung näher erläutert. In der Zeichnung zeigt:
- Figur 1: eine schematische Darstellung eines Ausführungsbeispiels eines UWB-Übertragungssystems gemäß der vorliegenden Erfindung;
- Figur 2: zwei zeitversetzt gesendete UWB-Impulse, die bei UWB-Übertragungssystemen gemäß dem Stand der Technik zur Übertragung einer "1" bzw. einer "0" verwendet werden; und
- Figur 3: UWB-Impulsfolgen, die bei dem in Fig. 1 dargestellten, erfindungsgemäßen UWB-Übertragungssystem verwendet werden.

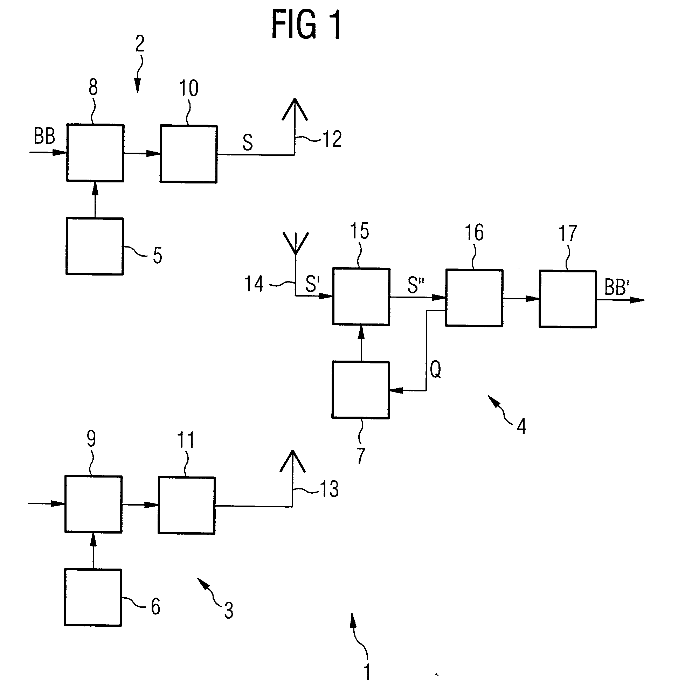

Figur 1 zeigt eine schematische Darstellung eines UWB-Übertragungssystems 1. Dieses weist eine erste Sendeeinheit 2, eine zweite Sendeinheit 3, eine Empfangseinheit 4, sowie weitere, hier nicht dargestellte Sende- und/oder Empfangseinheiten auf.

Die Sendeeinheiten 2, 3 enthalten jeweils eine Pseudo-Zufallscode-Erzeugungseinrichtung 5, 6, ein Gate 8, 9, eine Modulations-/Sendeeinrichtung 10, 11, sowie eine Antenneneinrichtung 12, 13. Die Empfangseinheit 4 ist ähnlich wie die Sendeeinheiten 2, 3 aufgebaut, und weist eine Antenneneinrichtung 14, eine Funk-Empfangseinrichtung 15, eine Pseudo-Zufallscode-Erzeugungseinrichtung 7, ein Gate 16, sowie eine Demodulationseinrichtung 17 auf.

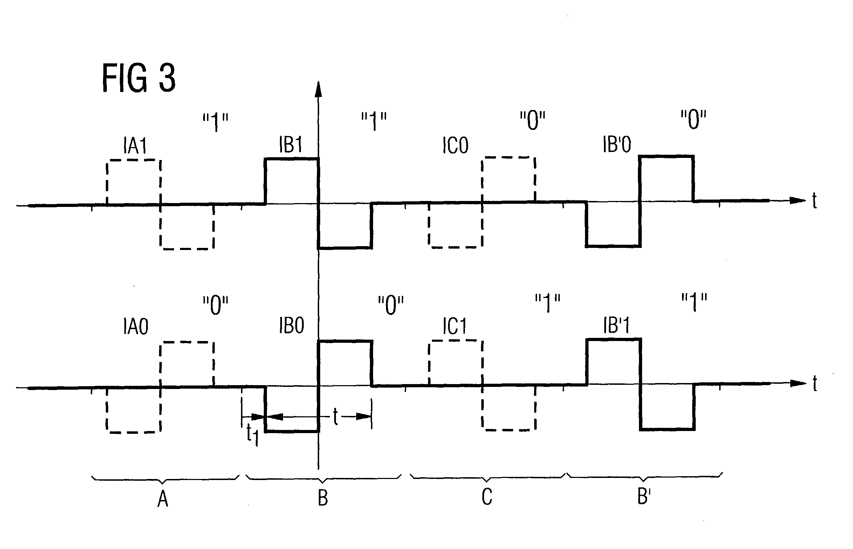

Der Informationsaustausch zwischen den Sendeeinheiten 2, 3 und der Empfangseinheit 4 erfolgt gemäß Figur 3 mittels Ultra-Breitband-Impulsen IA1, IB1, IC0, IB'0 bzw. IA0, IB0, IC1, IB'1. Um zu verhindern, daß sich die Impulse IA1, IB1, IC0, IB'0, IA0, IB0, IC1, IB'1 der einzelnen Sendeeinheiten 2, 3 überlagern, werden die Impulse IA1, IB1, IC0, IB'0, IA0, IB0, IC1, IB'1 im TDMA-Vielfachzugriffsverfahren übertragen ("TDMA" = time division multiplex access bzw. Zeitmultiplexzugriff). Dabei sind jeder Sendeeinheit 2, 3 jeweils bestimmte Zeitfenster A, B, C, D zugeordnet (beim hier gezeigten Ausführungsbeispiel sind der ersten Sendeeinheit 2 z.B. die Zeitfenster B, B' zugeordnet, der zweiten Sendeeinheit 3 z.B. das Zeitfenster A, und einer weiteren, nicht dargestellten Sendeeinheit z.B. das Zeitfenster C). Die Zeitfenster A, B, B', C haben alle im wesentlichen die gleiche Länge, hier ca. 500 Pikosekunden. Die einer bestimmten Sendeeinheit 2, 3 zugeordneten Zeitfenster folgen in unregelmäßigen, von einem Pseudo-Zufallscode bestimmten zeitlichen Abständen aufeinander (time hopping).

Gemäß Fig. 1 ist der der jeweiligen Sendeeinheit 2, 3 zugeordnete Pseudo-Zufallscode jeweils in der Pseudo-Zufallscode-Erzeugungseinrichtung 5, 6 der entsprechenden Sendeeinheit 2, 3 abgespeichert. Des weiteren sind in der Pseudo-Zufallscode-Erzeugungseinrichtung 7 der Empfangseinheit 4 die Pseudo-Zufallscodes derjenigen Sendeeinheiten 2, 3 gespeichert, von denen die Empfangseinheit 4 Informationen empfangen soll.

Werden z.B. von der ersten Sendeeinheit 2 aus Informationen (z.B. eine Folge von Datenbits) zur Empfangseinheit 4 übertragen, wird das die Informationen enthaltende Basisbandsignal BB dem Gate 8 zugeführt. Das jeweils zu übertragende Datenbit des Basisbandsignals BB wird vom Gate 8 zu dem vom entsprechenden Pseudo-Zufallscode definierten Zeitpunkt an die Modulations-/Sendeeinrichtung 10 weitergegeben. Dort wird das zu übertragende Datenbit in einen UWB-Impuls umgewandelt. Soll z.B. eine "1" übertragen werden, wird gemäß Fig. 3 während des der Sendeeinheit 2 zugeordneten Zeitfensters B der Impuls IB1 gesendet. Soll eine "0" übermittelt werden, wird statt des Impulses IB1 der Impuls IB0 übertragen.

Als Impulse können beliebige, mittelwertfreie Impulse kurzer Dauer und hoher Bandbreite verwendet werden.

Bei dem hier beschriebenen Ausführungsbeispiel beträgt die Dauer der UWB-Impulse IA1, IB1, IC0, IB'0, IA0, IB0, IC1, IB'1 jeweils ca. 300 Pikosekunden (Impulsdauer t), wobei die UWB-Impulse IA1, IB1, IC0, IB'0, IA0, IB0, IC1, IB'1 im wesentlichen die Form von einperiodigen (monozyklischen) Rechteck-Schwingungen mit relativ steil ansteigenden und abfallenden Flanken haben. Bei alternativen, hier nicht dargestellten Ausführungsbeispielen können statt Rechteck-Impulsen z.B. Gauß-Impulse, Gauß-Impulse erster Ableitung, Sägezahnimpulse, etc., und/oder statt einperiodiger Schwingungen halb- oder mehrperiodige Schwingungen verwendet werden (z.B. Rechteck-Schwingungen, die nur wenige Perioden umfassen, z.B. bi- oder trizyklische Rechteckschwingungen)).

Gleichgültig, ob eine "1" oder eine "0" übertragen werden soll, beginnen die Impulse IA1, IB1, IC0, IB'0, IA0, IB0, IC1, IB'1 stets eine vorbestimmte Zeitdauer t1 nach Beginn des jeweiligen Zeitfensters A, B, C, D (hier: 100 Pikosekunden).

Soll eine "1" übertragen werden, wird ein Impuls IA1, IB1, IC1, IB'1 verwendet, der im wesentlichen gegenphasig zu einem entsprechenden, bei einer zu übertragenden "0" verwendeten Impuls IA0, IB0, IC0, IB'0 ist. Die einer zu übertragenden "0" zugeordneten Impulse sind also invers zu den entsprechenden, einer zu übertragenden "1" zugeordneten Impulse IA0, IB0, IC0, IB'0.

Die in der ersten Sendeeinheit 2 erzeugten Impulse IB1, IB'0 (bzw. IB0, IB'1) werden einem ebenfalls in der Modulations-/Sendeeinrichtung 10 enthaltenen Hochpassfilter zugeführt (nicht dargestellt). Dieses weist eine Grenzfrequenz von ca. 1 GHZ auf. Durch das Hochpassfilter werden aus dem von der Modulations-/Sendeeinrichtung 10 erzeugten Impulssignal Frequenzbereiche herausgefiltert, die unter 1 GHz liegen. Dadurch wird erreicht, dass das gefilterte UWB-Impulssignal S keinen Gleichanteil aufweist (d.h. die durchschnittliche Impulsspannung bei 0V liegt). Außerdem wird vermieden, dass das UWB-Impulssignal S von starken Fernseh- und Radiosendesignalen gestört wird.

Das gefilterte UWB-Impulssignal S wird dann der Antenneneinrichtung 12 der ersten Sendeeinheit 2 zugeführt. Von dort wird das Signal S per Funk an die Antenneneinrichtung 14 der Empfangseinheit 4 übertragen, und dann deren Funk-Empfangseinrichtung 15 zugeführt (empfangenes UWB-Impulssignal S') .

Wie oben bereits erwähnt, ist in der Pseudo-Zufallscode-Erzeugungseinrichtung 7 der Empfangseinheit 4 ein Pseudo-Zufallscode gespeichert, der von der Pseudo-Zufallscode-Erzeugungseinrichtung 7 an die Funk-Empfangseinrichtung 15 geliefert wird. Diese lässt das empfangene Impulssignal S' nur während der vom Pseudo-Zufallscode definierten Zeiträume passieren, d.h. zu den Zeitfenstern B, B', die der Sendeeinheit 2 zugeordnet sind, von der die Empfangseinheit 4 Informationen empfangen soll. Dadurch werden dem Gate 16 nur diejenigen im Signal S' enthaltenen Impulse IB1, IB'0 bzw. IB0, IB'1 zugeführt, die von der ersten Sendeeinheit 2 stammen (Signal S"). Das Signal S" wird vom Gate 16 an die Demodulationseinrichtung 17 weitergeleitet.

Außerdem wird im Gate 16 aus dem Signal S" ein Synchronisationssignal Q abgeleitet, welches der Pseudo-Zufallscode-Erzeugungseinrichtung 7 zugeführt wird. Durch das Synchronisationssignal Q wird sichergestellt, daß die Funk-Empfangseinrichtung 15 das empfangene Impulssignal S' während der exakt richtigen Zeiträume (Zeitfenster B, B') passieren läßt.

Das von der Demodulationseinrichtung 17 erhaltene Signal S" wird - entsprechend umgekehrt wie in der Modulations-/Sendeeinrichtung 10 der ersten Sendeeinheit 2 - in ein Basisbanddsignal BB' zurückgewandelt. Hierzu wird in der Demodulationseinrichtung 17 ermittelt, ob die Impulsform eines empfangenen Impulses einem "nicht-invertierten" Impuls IB1, IB'1, oder einem "invertierten" Impuls IB0, IB'0 entspricht. Bei Ermittlung eines "nicht-invertierten" Impulses IB1, IB'1 gibt die Demodulationseinrichtung 17 ein Datenbit "1" aus. Wird dagegen ermittelt, dass die Impulsform eines empfangenen Impulses einem "invertierten" Impuls IB0, IB'0 entspricht, wird von der Demodulationseinrichtung 17 ein Datenbit "0" ausgegeben.

Im Gegensatz zu herkömmlichen, auf Impulslagemodulation basierenden UWB-Übertragungssystemen entfällt damit beim erfindungsgemäßen Übertagungsystem 1 die Notwendigkeit, Unterschiede in der Impulsankunftszeit auf einige trillionstel Sekunden genau festzustellen. Dadurch wird die Synchronisation in der Empfangseinheit 4 vereinfacht.

### Bezugszeichenliste

- 1: UWB-Übertragungssystem
- 2: erste Sendeeinheit
- 3: zweite Sendeinheit
- 4: Empfangseinheit
- 5: Pseudo-Zufallscode-Erzeugungseinrichtung
- 6: Pseudo-Zufallscode-Erzeugungseinrichtung
- 7: Pseudo-Zufallscode-Erzeugungseinrichtung
- 8: Gate
- 9: Gate
- 10: Modulations-/Sendeeinrichtung
- 11: Modulations-/Sendeeinrichtung
- 12: Antenneneinrichtung
- 13: Antenneneinrichtung
- 14: Antenneneinrichtung
- 15: Funk-Empfangseinrichtung
- 16: Gate
- 17: Demodulationseinrichtung

## Patentansprüche

1. Ultra-Breitband-Kommunikationssystem (1), welches eine Sendeeinheit (2) aufweist, von welcher aus Informationen in Form von Ultra-Breitband-Impulsen an eine Empfangseinheit (4) übertragen werden, **dadurch gekennzeichnet, daß** zur Informationsübertragung impulsinversionsmodulierte Ultra-Breitband-Impulse (IB1, IB0) verwendet werden.

2. Kommunikationssystem (1) nach Anspruch 1, bei welchem ein einer zu übertragenden "1" zugeordneter Impuls (IB1) im wesentlichen gegenphasig zu einem einer zu übertragenden "0" zugeordneten Impuls (IB0) ist.

3. Kommunikationssystem (1) nach Anspruch 1 oder 2, bei welchem mehrere Sendeeinheiten (2, 3) vorgesehen sind, die im Vielfachzugriffsverfahren Informationen in Form von Ultra-Breitband-Impulsen übertragen.

4. Kommunikationssystem (1) nach Anspruch 3, bei welchem die mehreren Sendeeinheiten (2, 3) die Informationen im TDMA-Vielfachzugriffsverfahren übertragen.

5. Kommunikationssystem (1) nach Anspruch 4, bei welchem die Sendeeinheiten (2, 3) jeweils eine Pseudo-Zufallscode-Erzeugungseinheit (5, 6) aufweisen, und die von einer bestimmten Sendeeinheit (2, 3) verwendeten TDMA-Zeitschlitze in Abhängikeit vom jeweils erzeugten Pseudo-Zufallscode gewählt werden.

6. Kommunikationssystem (1) nach einem der vorhergehenden Ansprüche, bei welchem die Sendeeinheit (2) ein HochpaßFilter aufweist, mit welchem aus dem gesendeten Ultra-Breitband-Impulssignal Frequenzen unterhalb einer Grenzfrequenz herausgefiltert werden.

7. Kommunikationssystem (1) nach Anspruch 6, bei welchem die Grenzfrequenz des Hochpaß-Filters kleiner oder gleich 1 GHz ist.

8. Kommunikationssystem (1) nach einem der vorhergehenden Ansprüche, bei welchem die Ultra-Breitband-Impulse (IB1, IB0) per Funk übertragen werden.

9. Sendeeinheit (2) und/oder Empfangseinheit (4), welche so ausgestaltet sind, daß sie in einem Kommunikationssystem (1) gemäß einem der Ansprüche 1 bis 8 verwendbar sind.

10. Ultra-Breitband-Übertragungsverfahren, wobei Informationen in Form von Ultra-Breitband-Impulsen (IB1, IB0) von einer Sendeeinheit (2) an eine Empfangseinheit (4) übertragen werden, **dadurch gekennzeichnet, daß** die Impulse (IB1, IB0) zur Informationsübertragung impulsinversions-moduliert werden.
